# EUROPÄISCHE PATENTSCHRIFT

(11) **EP 1 123 724 B1**
(45) Veröffentlichungstag und Bekanntmachung des Hinweises auf die Patenterteilung: **17.05.2006**
(21) Anmeldenummer: 01100405.8
(22) Anmeldetag: 08.01.2001
(51) Int. Cl.: B01D 39/18, B01D 39/16, A47L 9/14

(54) **Staubfilterbeutel**
Dust filter bag
Sac filtrant à poussière

(30) Priorität: 10.02.2000 DE 10006070
(43) Veröffentlichungstag der Anmeldung: 16.08.2001
(73) Patentinhaber: Carl Freudenberg KG, 69469 Weinheim (DE)
(72) Erfinder: Buchwald, Holger, 69502 Hemsbach (DE); Stöckler, Jörg, 73133 Karlsruhe (DE); Veeser, Klaus, Dr., 69469 Weinheim (DE)

(56) Entgegenhaltungen:
- EP-A- 0 338 479
- EP-A- 0 974 387

## Beschreibung

### Technisches Gebiet

Die Erfindung betrifft einen Staubfilterbeutel aus einer mit einer Tragschicht und einer auf der Rohgasseite angeordneten Trennschicht. An diese Filterbeutel werden verschiedenste Anforderungen gestellt. Ein Ziel besteht darin, eine hohe Filterwirkung, das heißt einen hohen Abscheidungsgrad zu erhalten. Hierzu müssen die Filterporen ausreichend klein sein. Gleichzeitig dürfen die Filterporen des Staubfilterbeutels aber auch nicht verstopfen, damit eine hohe Saug- oder Blasleistung, beispielsweise eines Staubsaugers, erhalten bleibt und ein Auswechseln des Staubfilterbeutels vor Erreichen einer bestimmten Füllmenge allein deswegen vermieden wird.

Weiterhin müssen die Staubfilterbeutel eine ausreichende mechanische Festigkeit aufweisen, um während der Anbringung oder in gefülltem Zustand nicht aufzureißen oder zu platzen. Auch für die Herstellung der Beutel mittels mehrerer Faltvorgänge ist eine entsprechende Festigkeit erforderlich.

### Stand der Technik

Staubfilterbeutel, die aus einem porösen Vliesstoff und einem Filterpapier bestehen, sind aus der EP 0 635 297 A1 bekannt und werden zu doppellagigen Staubfilterbeuteln verarbeitet. Als Vliesstoff kann ein Meltblown-Feinfaservlies zum Einsatz kommen, das die Innenseite des Staubfilterbeutels bedeckt und den Staubfilterbeutel verstärkt. Der Verstärkungseffekt ist nicht befriedigend.

Weitere Staubfilterbeutel sind aus der EP 0 388 479 B1 bekannt. Der dort beschriebene Staubfilterbeutel besteht aus einer Filterpapier-Außenlage und einem innenliegenden Vliesstoff. Der Vliesstoff ist als Feinfaservliesstoff ausgebildet und ebenfalls auf der Anströmseite angeordnet. Dabei können die feinen Fasern des Feinfaservliesstoffs im thermoplastischen Zustand direkt auf dem Filterpapier abgelegt und mit diesem verbunden sein.

Der Feinfaservliesstoff kann mit einem Stützelement verbunden sein, welches ebenfalls aus Vliesstoff besteht.

Das Dokument EP 0 974 387 A1 beschreibt einen Staubfliterbeutel, der aus einer mit einer Papierschicht zusammenlaminierten Faserschicht besteht, wobei die Faserschicht aus synthetischen, polymeren Fasern besteht und auf der Reingasseite der Papierschicht angeordnet ist, verschmolzene Polymerbereiche enthält, durch die Polymerbereiche zusätzlich in sich selbst verfestigt und mit der Papierschicht verbunden ist und wobei die Polymerbereiche eine Verschweißungsfläche von 0,5 bis 10 % der Oberfläche aufweisen.

Ein Nachteil der bekannten Staubfilterbeutel besteht darin, daß bei dem Aufsaugen von Wasser oder sonstiger mit der zu reinigenden Luft angesaugter Flüssigkeit die Filterpapieraußenlage aufweicht und ihre Festigkeit einbüßt, wodurch beim Staubsaugen oder Herausnehmen des Staubfilterbeutels ein Aufreißen und eine Verschmutzung der Umgebung zu befürchten ist. Die Filterwirkung in bezug auf Feinstpartikel ist wenig befriedigend.

Die Erfindung hat sich die Aufgabe gestellt, einen Staubfilterbeutel anzugeben, der einen geringen Druckdifferenzanstieg trotz hohen Füllgrades hervorruft.

### Darstellung der Erfindung

Erfindungsgemäß wird die Aufgabe durch einen Staubfilterbeutel gelöst, wie er in Anspruch 1 angegeben ist.
Die als Vorfilter aus einem Mikrofaservlies bestehende Trennschicht, diedie unter der Last des Filterkuchens oder aufgrund von ungleichmäßigen Strömungsverhältnissen zeitweilig von der Tragschichtabhebbar und in sich selbst verformbar ist, führt zu einem Abreinigen des sich auf der rohluftseitigen Oberfläche der Trennschicht aufbauenden Staubkuchens. Die durch den erfindungsgemäßen Aufbau erzielte partielle Selbstreinigung der Filteroberfläche verhindert eine vorzeitige Blockade, d.h., ein starkes Ansteigen der Druckdifferenz bevor ein hoher Füllungsgrad des Staubfilterbeutels erreicht ist. Dadurch können die Staubfilterbeutel besser ausgenutzt werden und müssen nicht so häufig gewechselt werden.

Weiter vorteilhafte Ausgestaltungen der Erfindung sind in den Ansprüchen 2 bis 16 dargelegt.
Die Fasern können elektrostatisch aufgeladen sein, um eine Verbesserung der Filterwirkung in bezug auf Feinststäube zu erzielen

Ergänzend zu der auf der Rohgasseite angeordneten Faserschicht aus polymeren Fasern kann gegebenenfalls auf der Reinluftseite eine ergänzende, weitere Faserschicht aus synthetischen, polymeren Fasern vorgesehen sein und eine weitere Verbesserung bestimmter Eigenschaften bewirken. Hierdurch muß aber eine Verteuerung des Staubfilterbeutels in Kauf genommen werden. Im Rahmen der vorliegenden Erfindung wird daher eine Ausführung bevorzugt, bei der nur auf der Rohluftseite eine Schicht aus synthetischen, polymeren Mikrofasern vorgesehen ist.

Die Trennschicht besteht aus einem zumindest eigenfesten Vliesstoff, um sicher zu stellen, daß auch bei völliger Zerstörung der Papierschicht der Staubfilterbeutel ausreichend stabil und filterwirksam bleibt. Eine hygienische Entsorgung des zumindest teilweise mit Staub gefüllten Staubfilterbeutels ist somit auch in solchen Fällen möglich.
Der Vliesstoff kann durch eine gegenseitige Verklebung und/oder Verschlingung der ihn bildenden Fasern und/oder Fäden feuchtigkeitsstabil verfestigt sein und gegebenenfalls verschmolzene Polymerbereiche enthalten und durch diese Bereiche zusätzlich in sich selbst verfestigt und mit der Papierschicht verbunden sein.

Die Polymerbereiche können zur Bildung von Staubkammern nach Art eines Waben- oder Waffelmusters verteilt sein. Während sich das Papier aufgrund seiner Papierbindung gegenüber dem darauf während der bestimmungsgemäßen Verwendung des Staubfilterbeutels lastenden Luftdruck starr und unnachgiebig verhält, ergibt sich auf der Rohluftseite eine elastische Deformierung der Faserschicht in den Zwischenzonen des Waben- oder des Waffelmusters, was zur Bildung von Staubkammern führt.

Die Polymerbereiche können zumindest teilweise in die Papierschicht penetriert sein, in der sie eine zusätzliche und zähharte Verfestigung der Faserstruktur bewirken. Die brüchige Struktur der Papierbindung wird hierdurch positiv verändert. Die Feuchtigkeitsbeständigkeit und/oder Weiterreißfestigkeit der Papierschicht wird durch die Polymerbereiche unbedingt verbessert.

Auf der anderen Seite kann der für die Erzeugung von Faltungen vorteilhafte Einsatz der Papierschicht trotz der Möglichkeit der Wasseraufnahme beibehalten werden. Durch die Papierschicht wird nämlich die Faltbarkeit des Staubfilterbeutels gegenüber einer reinen Faserschicht aus Polymerfasern erst ermöglicht.

In einer Weiterbildung ist der Staubfilterbeutel so ausgebildet, daß die Trennschicht zumindest zwei Teilschichten umfaßt. Das ist dann von besonderem Vorteil, wenn Bereiche mit unterschiedlicher Porosität erzeugt werden sollen.

Insbesondere kann die auf der Reingasseite der Papierschicht des Staubfilterbeutels angeordnete Stützschicht aus einem Spinnvlies bestehen. Dieses Spinnvlies weist in der Regel eine hohe Widerstandsfähigkeit gegen Abrieb auf. Dies ist dann wichtig, wenn der Staubfilterbeutel während der Herstellung, der Anbringung oder des Betriebs mit rauhen Oberflächen in Kontakt kommt.

Eine besonders gute Reinigungswirkung bei ausreichender mechanischer Festigkeit des Staubfilterbeutels erhält man dann, wenn die aus Mikrofasern bestehende Trennschicht ein Flächengewicht von 5 g/m² bis 40 g/m² (ISO 536) hat.

Die Papierschicht hat in vorteilhafter Weise ein Flächengewicht von 20 g/m² bis 100 g/m²s (ISO 536).

Die Luftdurchlässigkeit des gebrauchsfertigen Produkts liegt bei 100 bis 500 I/m² s bei einem Differenzdruck von 200 Pa (DIN 53887).

### Kurzbeschreibung der Zeichnung

Ein Ausführungsbeispiel der Erfindung ist in der Zeichnung dargestellt. Es zeigt die:

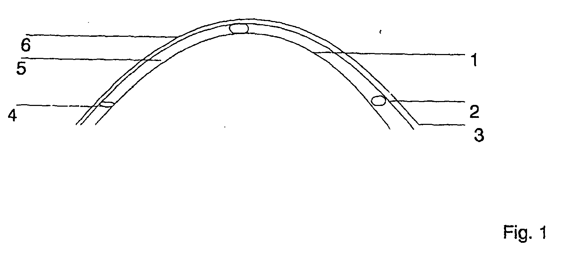

- Fig. 1: einen Schnitt durch einendreilagigen Staubfilterbeutel.

### Ausführung der Erfindung

In Fig. 1 ist ein Staubfilterbeutel gemäß der Erfindung dargestellt. Er besteht aus einer der Staubgasseite oder Ansaugseite zugewandten Vorfilter oder Trennschicht 1 aus einem Mikrofaservlies und einer als Tragschicht ausgebildeten Papierschicht 2.

Auf der Reinluftseite kann zusätzlich eine Faserschicht aus polymerem Material angeordnet sein, die aus einem aus thermoplastischen Fasern bestehenden Spinnvliesstoff 3 gebildet ist.

Der Mikrofaser-Vliesstoff 1 und die Papierschicht 2 liegen im wesentlichen lose aufeinander, so daß ein Zwischenraum 5 vorhanden ist. Ebenso liegt der Spinnvliesstoff 3 im wesentlichen lose auf der Papierschicht auf, wodurch in Teilbereichen ein Zwischenraum 6 eingeschlossen wird.

Zur Erhöhung der Festigkeit des Staubfilterbeutels kann dieser durch Punktverschweißung 4 an örtlich beabstandeten Stellen verfestigt sein, wodurch Oberflächenstrukturen vorhanden sind.

Die zu Polymerbereichen führenden Punktverschweißungen 4 können durch Ultraschallkalandrierung erzeugt werden. Dabei wird das thermoplastische Material des Mikrofaser-Vlieses 1 und des aus einem Spinnvlies bestehenden Stützvlieses 3 an vorherbestimmten Stellen zum Schmelzen gebracht und unter hohem Druck mit der Papierschicht 2 verbunden. Die Art des Papiers ist an sich ohne Bedeutung, sofern hinreichende Filtereigenschaften vorhanden sind.

Das geschmolzene thermoplastische Material des Mikrofaser-Vliesstoffes 1 und des Spinnvliesstoffs 2 dringt dabei zumindest teilweise in die Papierschicht 2 ein.

Zum Schutz der gegen Abrieb empfindlichen Papierschicht dient der Spinnvliesstoff 3 mit höheren Festigkeitswerten und dafür relativ geringerer Filterwirkung. Im wesentlichen hat er die Aufgabe, die Papierschicht 2 vor Abrieb zu schützen und dem Staubfilterbeutel eine wesentlich verbesserte Reißfestigkeit unter Vermeidung einer nennenswerten Beeinträchtigung der Filterwirkung insbesondere bei eintretender Benetzung zu verleihen. Es wird insbesondere vermieden, daß die Papierschicht 2 des Staubfilterbeutels reißt und seine Filterwirkung völlig einbüßt. Es ist sogar möglich, daß die Papierschicht 2 nach eingetretener Benetzung während der bestimmungsgemäßen Verwendung wieder trocknet, ohne daß sich eine nennenswerte Beeinträchtigung der Filterwirkung ergibt.

## Patentansprüche

1. Mehrlagiger Staubsaugerbeutel, umfassend eine Tragschicht aus Papier, die rohgasseitig von einem Vorfilter aus Mikrofasern überdeckt ist, auf dem sich während der bestimmungsgemäßen Verwendung ein Filterkuchen sammelt, **dadurch gekennzeichnet, daß** das Vorfilter als Trennschicht ausgebildet und zwischen dem Filterkuchen und der Tragschicht als Trennschicht wirksam ist, die unter der Last des Filterkuchens oder aufgrund von ungleichmäßigen Strömungsverhältnissen zeitweilig von der Tragschicht abhebbar und in sich selbst verformbar ist, wobei die Trennschicht, isoliert von dem Papier, in jeder Richtung um zumindest 30 % ihrer ursprünglichen Länge ohne nennenswerte Faserbrüche dehnbar und nur in musterartig verteilten Flächenbereichen mit der Tragschicht fest verbunden ist.

2. Mehrlagiger Staubsaugerbeutel nach Anspruch 1, **dadurch gekennzeichnet, daß** die Trennschicht hydrophobe und schmutzabweisende Eigenschaften besitzt und zumindest 70 % der Oberfläche der Tragschicht mit Mikrofasern überdeckt.

3. Mehrlagiger Staubsaugerbeutel nach Anspruch 1 oder 2, **dadurch gekennzeichnet, daß** die aus Mikrofasern bestehende Trennschicht in sich verfestigt ist und Bereiche mit unterschiedlicher Porosität aufweist.

4. Staubfilterbeutel nach einem der Ansprüche 1 bis 3, **dadurch gekennzeichnet, daß** die Trennschicht zumindest zwei Teilschichten umfaßt, von denen eine Bereiche mit unterschiedlichen Porositäten aufweist.

5. Staubfilterbeutel nach einem der Ansprüche 1 bis 4, **dadurch gekennzeichnet, daß** die Fasern der Trennschicht elektrostatisch aufgeladen sind.

6. Staubfilterbeutel nach einem der Ansprüche 1 bis 5, **dadurch gekennzeichnet, daß** die Trennschicht aus einem zumindest eigenfesten Vliesstoff besteht.

7. Staubfilterbeutel nach einem der Ansprüche 1 bis 6, **dadurch gekennzeichnet, daß** der Vliesstoff durch eine gegenseitige Verklebung und / oder Verschlingung der ihn bildenden Mikrofasern verfestigt ist.

8. Staubfilterbeutel nach einem der Ansprüche 1 bis 7, **dadurch gekennzeichnet, daß** die Trennschicht verschmolzene Polymerbereiche enthält und durch die Polymerbereiche zusätzlich in sich selbst verfestigt und mit der Papierschicht verbunden ist.

9. Staubfilterbeutel nach Anspruch 8, **dadurch gekennzeichnet, daß** die Polymerbereiche zur Bildung von Staubkammern nach Art eines Waben- oder Waffelmusters verteilt sind.

10. Staubfilterbeutel nach einem der Ansprüche 8 oder 9, **dadurch gekennzeichnet, daß** die Polymerbereiche zumindest teilweise in die Papierschicht penetriert sind.

11. Staubfilterbeutel nach einem der Ansprüche 1 bis 10, **dadurch gekennzeichnet, daß** die Feuchtigkeitsbeständigkeit und/oder Weiterreißfestigkeit der Tragschicht durch die Polymerbereiche und/oder eine Stützschicht aus synthetischen Fasern auf der Reingasseite verbessert ist.

12. Staubfilterbeutel nach Anspruch 11, **dadurch gekennzeichnet, daß** die auf der Reingasseite der Tragschicht angeordnete Stützschicht aus einem Spinnvliesstoff besteht.

13. Staubfilterbeutel nach einem der Ansprüche 1 bis 10, **dadurch gekennzeichnet, daß** die aus Mikrofasern bestehende Trennschicht ein Flächengewicht von 5 bis 40 g/m² aufweist.

14. Staubfilterbeutel nach einem der Ansprüche 1 bis 13, **dadurch gekennzeichnet, daß** die Tragschicht ein Flächengewicht von 20 g/m² bis 100 g/m² hat.

15. Staubfilterbeutel nach einem der Ansprüche 1 bis **14**, **dadurch gekennzeichnet, daß** der Staubfilterbeutel als Staubsaugerbeutel ausgebildet ist.

## Claims

1. Multilayer dust filter bag, comprising a carrier layer made of paper which, on the raw gas side, is covered by a pre-filter made of microfibres, on which a filter cake collects during the intended use, **characterized in that** the pre-filter is formed as a release layer and acts as a release layer between the filter cake and the carrier layer and which, under the load of the filter cake or on account of non-uniform flow relationships, can be lifted off the carrier layer from time to time and is intrinsically deformable, the release layer, isolated from the paper, being capable of expansion in any direction by at least 30% of its original length without noticeable fibre fracture and being firmly connected to the carrier layer only in surface regions distributed in the manner of a pattern.

2. Multilayer dust filter bag according to Claim 1, **characterized in that** the release layer has hydrophobic and dirt-repellent properties and covers at least 70% of the surface of the carrier layer with microfibres.

3. Multilayer dust filter bag according to Claim 1 or 2, **characterized in that** the release layer consisting of microfibres is intrinsically consolidated and has regions of different porosity.

4. Dust filter bag according to one of Claims 1 to 3, **characterized in that** the release layer comprises at least two part layers, one of which has regions of different porosities.

5. Dust filter bag according to one of Claims 1 to 4, **characterized in that** the fibres of the release layer are charged electrostatically.

6. Dust filter bag according to one of Claims 1 to 5, **characterized in that** the release layer consists of an at least inherently strong nonwoven.

7. Dust filter bag according to one of Claims 1 to 6, **characterized in that** the nonwoven is consolidated by means of mutual bonding and/or intertwining of the microfibres forming it.

8. Dust filter bag according to one of Claims 1 to 7, **characterized in that** the release layer contains fused polymer regions and is additionally intrinsically consolidated and connected to the paper layer by the polymer regions.

9. Dust filter bag according to Claim 8, **characterized in that** the polymer regions are distributed in the manner of a honeycomb or waffle pattern in order to form dust chambers.

10. Dust filter bag according to either of Claims 8 and 9, **characterized in that** the polymer regions penetrate at least partly into the paper layer.

11. Dust filter bag according to one of Claims 1 to 10, **characterized in that** the moisture resistance and/or tear propagation resistance of the carrier layer is improved by the polymer regions and/or a supporting layer of synthetic fibres on the clean gas side.

12. Dust filter bag according to Claim 11, **characterized in that** the supporting layer arranged on the clean gas side of the carrier layer consists of a spun-bonded nonwoven.

13. Dust filter bag according to one of Claims 1 to 10, **characterized in that** the release layer consisting of microfibres has a weight per unit area of 5 to 40 g/m².

14. Dust filter bag according to one of Claims 1 to 13, **characterized in that** the carrier layer has a weight per unit area of 20 g/m² to 100 g/m².

15. Dust filter bag according to one of Claims 1 to 14, **characterized in that** the dust filter bag is formed as a vacuum cleaner bag.

## Revendications

1. Sac aspirant à poussière multicouche, comprenant une couche porteuse en papier, qui est recouverte du côté du gaz brut par un préfiltre en microfibres, sur lequel s'accumule pendant l'utilisation conforme un gâteau de filtration, **caractérisé en ce que** le préfiltre est réalisé sous la forme de couche séparatrice et agit en tant que couche séparatrice entre le gâteau de filtration et la couche porteuse, laquelle peut être soulevée temporairement de la couche porteuse sous l'effet de la charge du gâteau de filtration ou en raison de conditions d'écoulement non homogènes et peut être déformée en soi, la couche séparatrice, isolée du papier, pouvant être étirée dans toutes les directions d'au moins 30% de sa longueur initiale sans rupture de fibre notoire et étant connectée fixement à la couche porteuse uniquement dans des régions de la surface réparties sous forme de motif.

2. Sac aspirant à poussière multicouche selon la revendication 1, **caractérisé en ce que** la couche séparatrice possède des propriétés hydrophobes et repoussant la poussière et recouvre au moins 70% de la surface de la couche porteuse avec des microfibres.

3. Sac aspirant à poussière multicouche selon la revendication 1 ou 2, **caractérisé en ce que** la couche séparatrice constituée de microfibres est consolidée en soi et présente des régions de porosité différente.

4. Sac filtrant à poussière selon l'une quelconque des revendications 1 à 3, **caractérisé en ce que** la couche séparatrice comprend au moins deux couches partielles dont une présente des régions de porosités différentes.

5. Sac filtrant à poussière selon l'une quelconque des revendications 1 à 4, **caractérisé en ce que** les fibres de la couche séparatrice sont chargées électrostatiquement.

6. Sac filtrant à poussière selon l'une quelconque des revendications 1 à 5, **caractérisé en ce que** la couche séparatrice se compose d'une étoffe non tissée de stabilité au moins inhérente.

7. Sac filtrant à poussière selon l'une quelconque des revendications 1 à 6, **caractérisé en ce que** l'étoffe non tissée est consolidée par un collage mutuel et/ou un entrelacement des microfibres la composant.

8. Sac filtrant à poussière selon l'une quelconque des revendications 1 à 7, **caractérisé en ce que** la couche séparatrice contient des régions polymères fondues et est connectée à la couche de papier et est en outre consolidée en soi par les régions polymères.

9. Sac filtrant à poussière selon la revendication 8, **caractérisé en ce que** les régions polymères sont réparties à la manière d'un motif en nid d'abeilles ou en gaufre pour former des chambres à poussière.

10. Sac filtrant à poussière selon l'une quelconque des revendications 8 ou 9, **caractérisé en ce que** les régions polymères pénètrent au moins en partie dans la couche de papier.

11. Sac filtrant à poussière selon l'une quelconque des revendications 1 à 10, **caractérisé en ce que** la résistance à l'humidité et/ou la résistance à la déchirure continue de la couche porteuse est améliorée par les régions polymères et/ou par une couche de support en fibres synthétiques du côté du gaz pur.

12. Sac filtrant à poussière selon la revendication 11, **caractérisé en ce que** la couche de support disposée du côté du gaz pur de la couche porteuse est constituée d'étoffe non tissée filée.

13. Sac filtrant à poussière selon l'une quelconque des revendications 1 à 10, **caractérisé en ce que** la couche séparatrice constituée de microfibres présente un grammage de 5 à 40 g/m².

14. Sac filtrant à poussière selon l'une quelconque des revendications 1 à 13, **caractérisé en ce que** la couche porteuse a un grammage de 20 g/m² à 100 g/m².

15. Sac filtrant à poussière selon l'une quelconque des revendications 1 à 14, **caractérisé en ce que** le sac filtrant à poussière est réalisé sous la forme d'un sac aspirant à poussière.
